# EUROPEAN PATENT SPECIFICATION

(11) **EP 1 963 701 B1**
(45) Date of publication and mention of the grant of the patent: **19.05.2010**
(21) Application number: 05849553.2
(22) Date of filing: 19.12.2005
(51) Int. Cl.: F16D 65/097

(54) **DISC BRAKE CALIPER**
SCHEIBENBREMSENSATTEL
ETRIER DE FREIN A DISQUE

(43) Date of publication of application: 03.09.2008
(73) Proprietor: Freni Brembo S.p.A., 24035 Curno (IT)
(72) Inventor: SALA, Paolo, I-24030 Villa d'Adda (IT)
(74) Representative: Pulieri, Gianluca Antonio
(86) International application number: PCT/IT2005/000741
(87) International publication number: WO 2007/072510

(56) References cited:
- EP-A- 0 703 378
- EP-A- 1 441 141
- EP-A- 1 519 070
- WO-A-03/069180
- DE-B3- 10 302 332
- US-A- 4 773 511
- US-A1- 2004 238 292

## Description

The present invention regards a caliper for disc brakes and a caliper for multidisc brakes, for example two-disc brakes.

As is known, the multidisc brake calipers generally have high axial dimensions, that is with respect to a direction parallel to the rotation axis of the brake discs, since they must receive at least two consecutively flanked discs with respect to an axial direction.

Such calipers are generally of fixed type and have a frame structure in which the pads transmit the braking force exchanged with the disc, unloading it on the side bridges of the calipers.

Due to the high braking forces but also geometric dimensions of the brake which confer large arms to the braking forces with respect to the anchoring portion of the caliper to the related spindle, such calipers are subject to deformations such to compromise their regular operation.

In order to overcome these drawbacks, it is known in the art to reinforce the caliper body by increasing its thickness and dimensions. See for example US 4773511. In this manner, however, the already high mass of the braking structure is increased, and therefore it is not entirely avoided the danger of high deformations of the caliper body, due to the high braking forces and related moments which act on the caliper body.

The problem of the present invention is that of realising a disc brake caliper which resolves the drawbacks mentioned with reference to the prior art.

Such drawbacks and limitations are resolved by a disc brake caliper in accordance with claim 1.

Other embodiments of the disc brake caliper according to the invention are described in the subsequent claims.

Further characteristics and advantages of the present invention will be more comprehensible from the description reported below of its preferred and not limiting embodiment examples, in which:

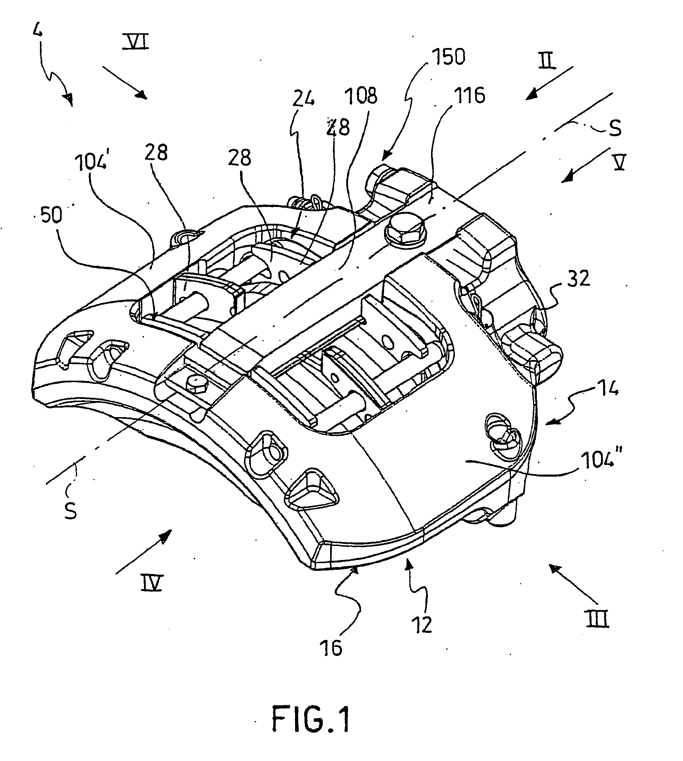

Figure 1 represents a perspective view of a two-disc brake caliper according to the present invention;

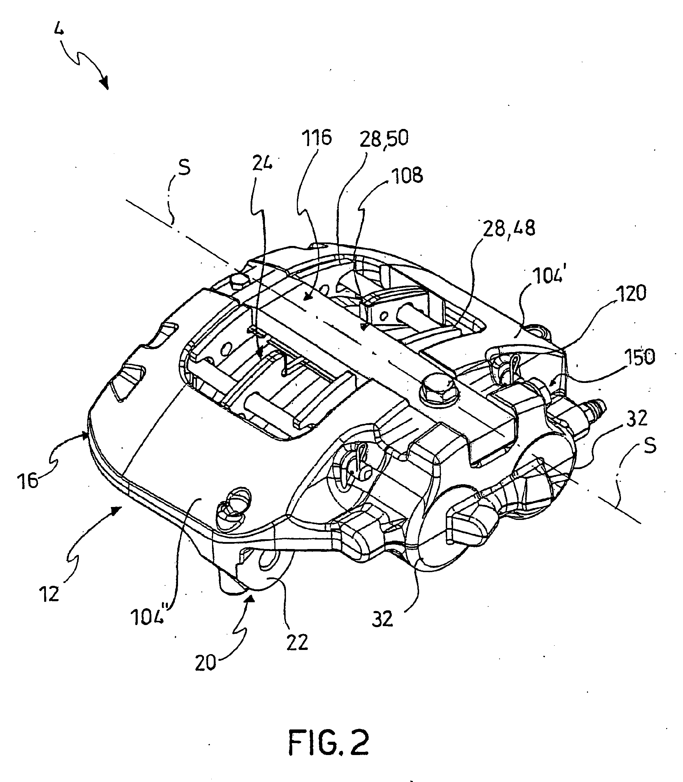

Figure 2 represents a perspective view of the two-disc brake caliper of figure 1, from the side of the arrow II of figure 1;

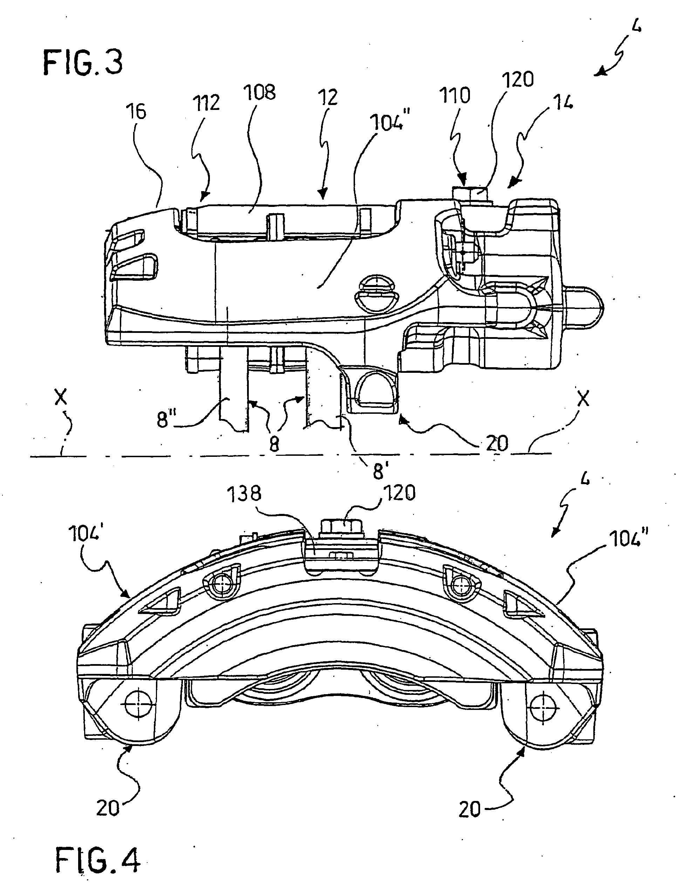

Figure 3 represents an orthogonal view of the two-disc brake caliper of figure 1, from the side of the arrow III of figure 1;

Figure 4 represents an orthogonal view of the two-disc brake caliper of figure 1, from the side of the arrow IV of figure 1;

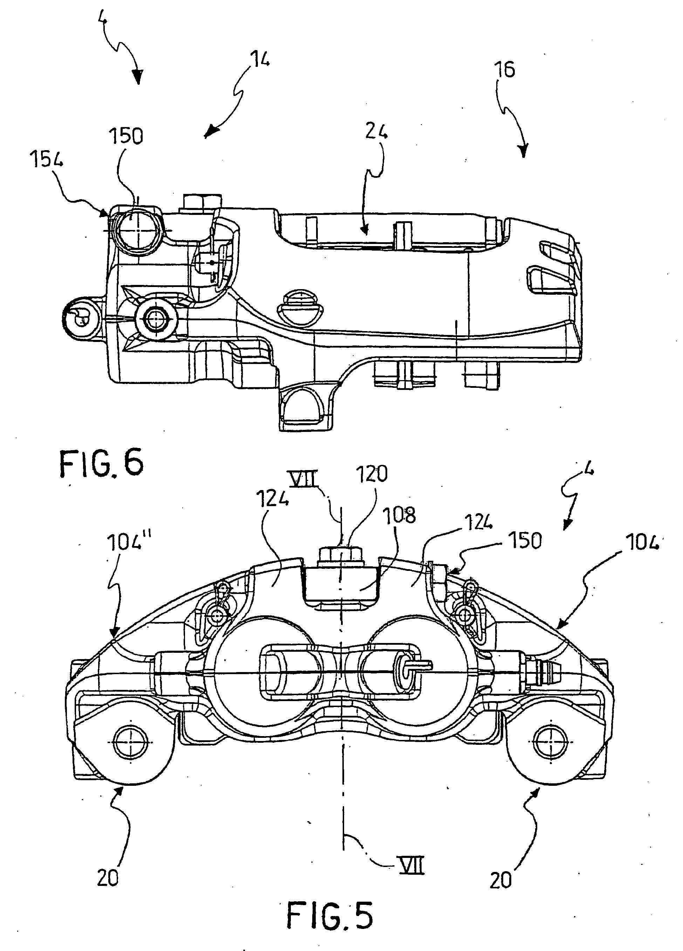

Figure 5 represents an orthogonal view of the two-disc brake caliper of figure 1, from the side of the arrow V of figure 1;

Figure 6 represents an orthogonal view of the two-disc brake caliper of figure 1, from the side of the arrow VI of figure 1;

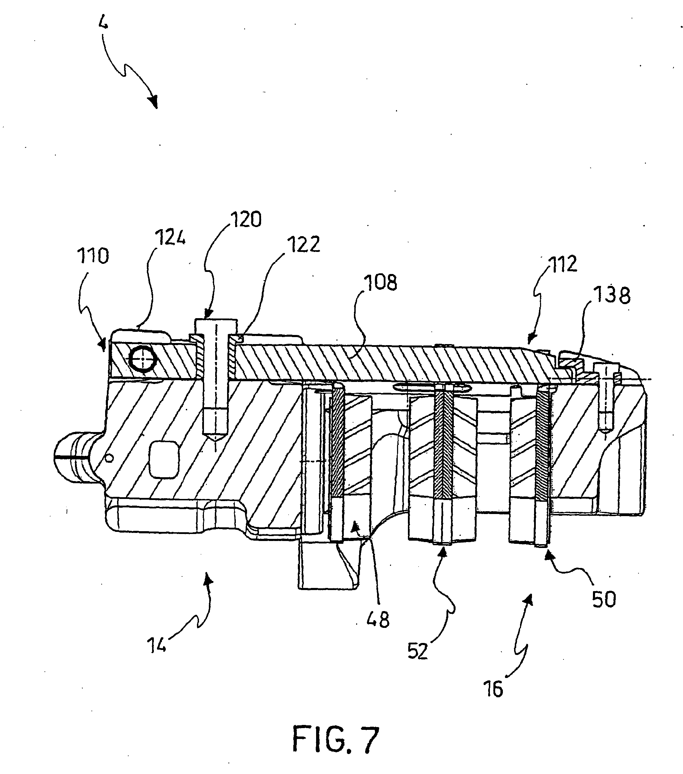

Figure 7 represents a sectional view of the two-disc brake caliper of figure 1, along the plane of section VII-VII of figure 5;

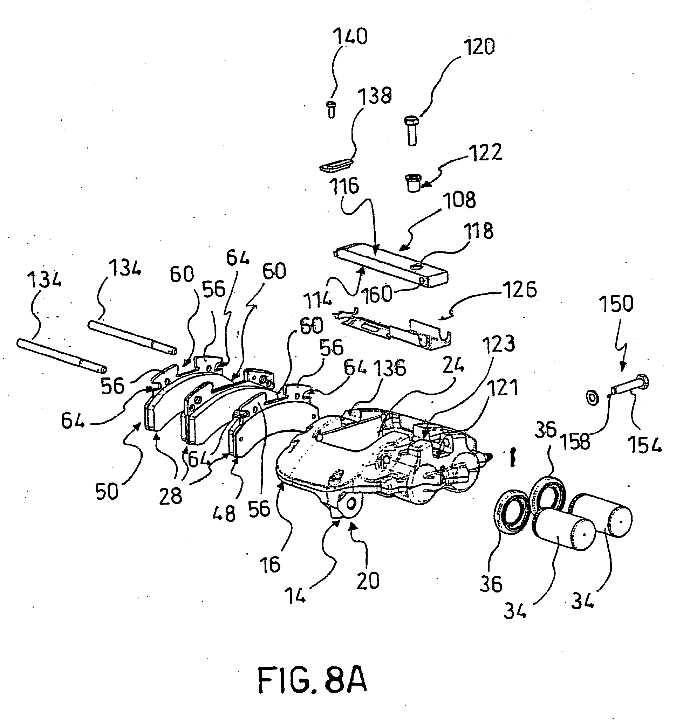

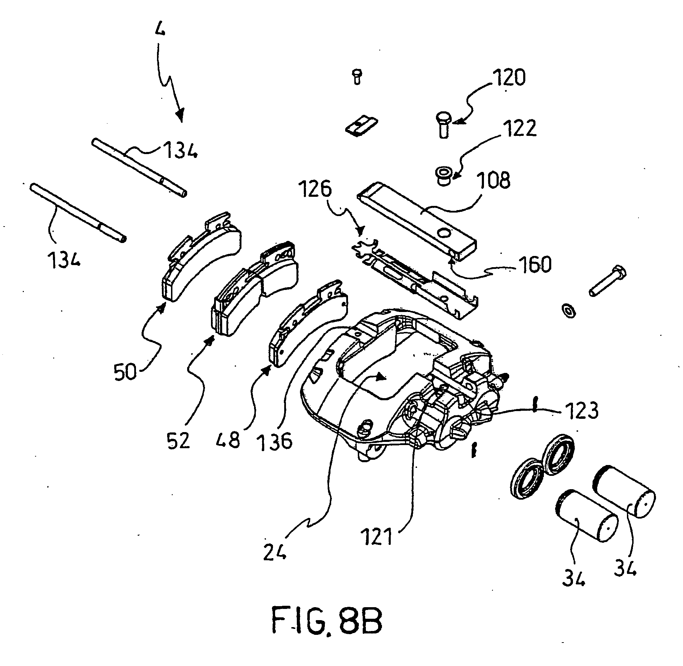

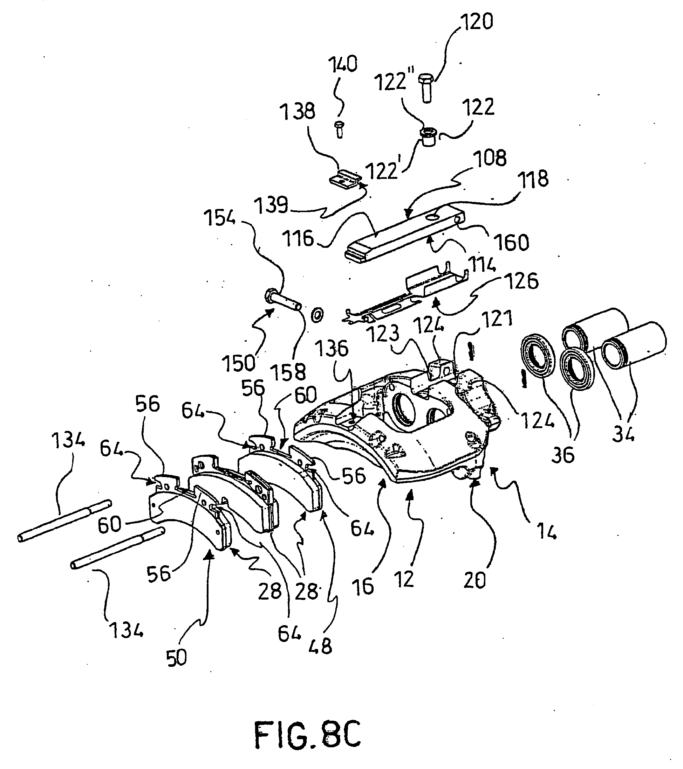

Figures 8A, 8B, 8C represent separated parts perspective views, from different angles, of the two-disc brake caliper of figure 1;

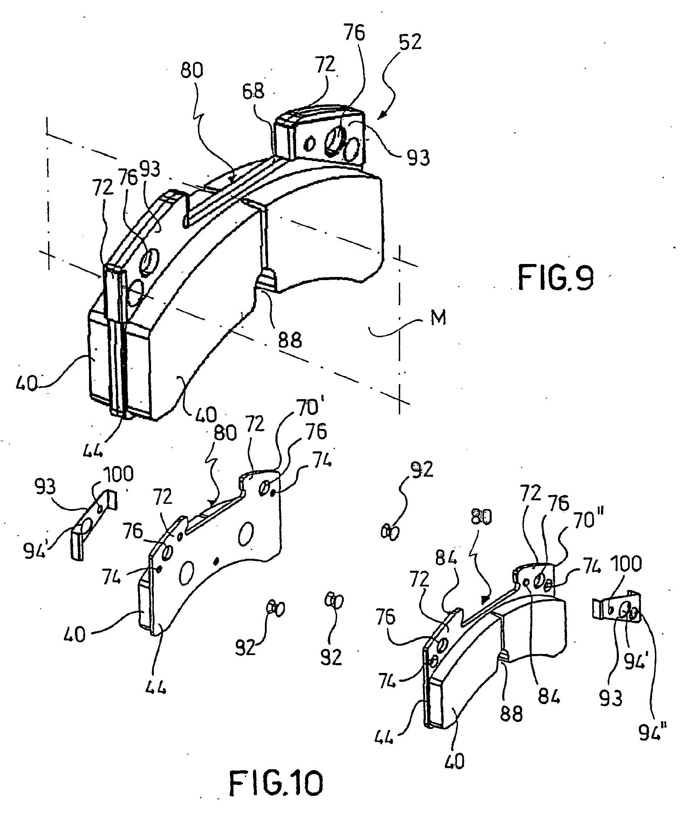

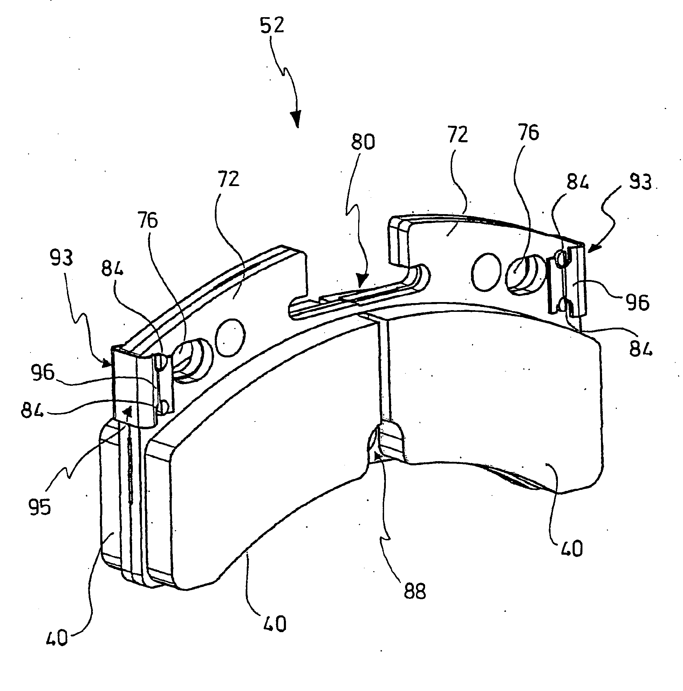

Figure 9 represents a perspective view of a pad of the two-disc brake caliper of figure 1;

Figure 10 represents a separated parts perspective view of the pad of figure 9;

Figure 11 represents a perspective view of a pad of the two-disc brake caliper of figure 1, according to an additional embodiment of the present invention;

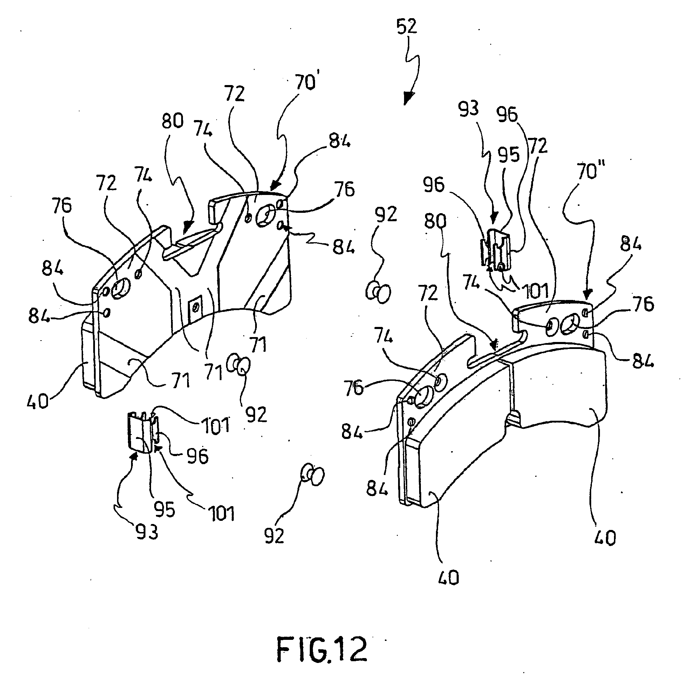

Figure 12 represents a separated parts perspective view of the pad of figure 11;

Figures 13A-13C represent perspective and orthogonal views of a detail of the caliper of figure 1;

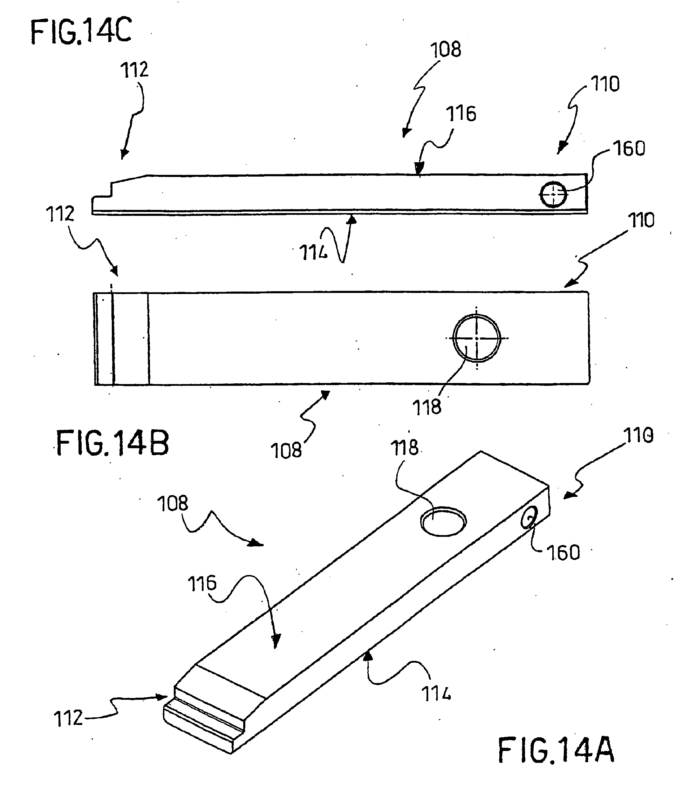

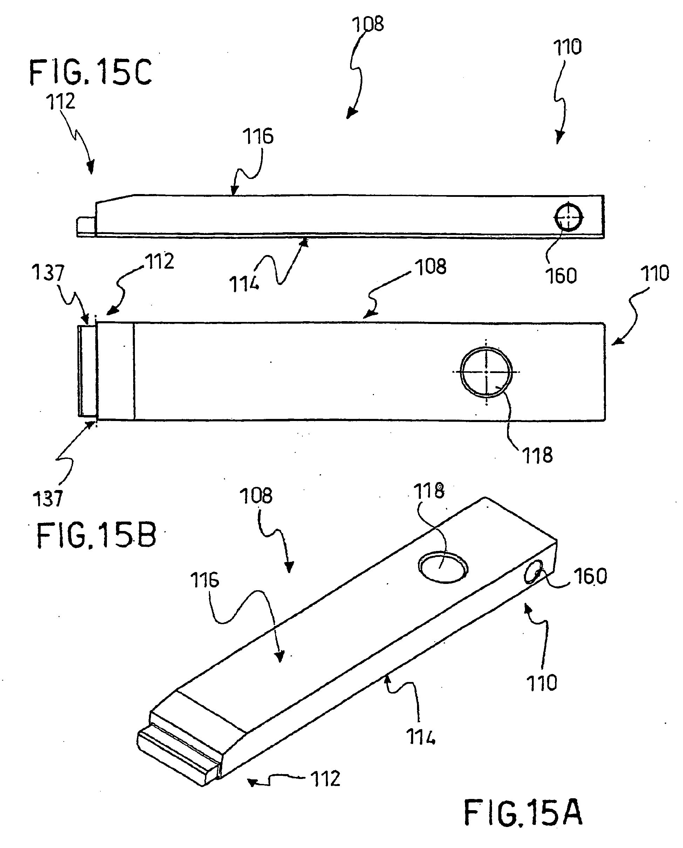

Figures 14A-14C and 15A-15C represent perspective and orthogonal views of details of the caliper of figure 1 according to different embodiments.

The elements or parts of elements in common between the embodiments described below will be indicated with the same numeric references.

With the term radial direction, it is intended a direction substantially perpendicular to the rotation axis X of the brake discs which may be associated to the disc brake caliper.

With the term axial direction it is intended a direction substantially parallel to the rotation axis X of the brake discs.

With the term tangential direction it is intended a direction substantially perpendicular to the axial direction and radial direction, as well as parallel to the braking band of the associated brake discs.

With reference to the aforementioned figures, with 4 a two-disc brake caliper was generically indicated, adapted to be mounted astride at least one brake disc 8 which is rotating and coaxial around a rotation axis X. According to one embodiment, the caliper is a caliper of two-disc type adapted to cooperate with a first and a second brake disc 8',8", equivalent and coaxial with each other.

The brake discs 8 are preferably sliding mounted with respect to the axial direction X, for example by means of a sliding connection of known type.

The disc brake caliper 4 comprises a caliper body 12 equipped with a side support portion 14 and a side disc portion 16. Said side support and side disc portions 14,16 are preferably made of one piece, or rather the caliper body 12 is of enbloc type; also foreseen is an embodiment comprising such portions realised separately and then subsequently joined, for example through threaded connection means.

The side support portion 14 comprises support means 20 of the caliper body 12, adapted to fastening the caliper body 12 for example to a spindle. The side support portion 14 preferably comprises anchoring holes 22 adapted to receive screw connections 12 and the related support or spindle; such anchoring holes 22, as well related screw connection means, may be directed both radially and axially.

The side disc portion 16 is axially opposed to the side support portion 14 and together with the side support portion 14 it delimits a housing space 24 adapted to at least partially house the brake discs 8 and the related pads 28 for the braking of the discs 8. Preferably, the caliper body 12 has a centre plane W which divides the housing space 24 into two symmetrical portions.

The side disc portion 16 is completely arranged cantilevered with respect to the support means 20 of the caliper body 12.

At least one of said side support portions and side discs 14,16 comprises at least one cylinder 32 adapted to house at least one piston 34 which faces the pads 28 for the braking of the brake disc 8. The cylinders 32 and the pistons 34 are preferably equipped with gaskets for the sealing of the brake fluids and for the return of the pistons 34 towards the interior of the cylinders 32 at the end of the step of braking as well as boots 36.

The pads 28 comprise a friction portion 40 adapted to exercise an action of friction against the brake discs 8 which they face, and a support plate 44 adapted to support the friction portion 40 and to receive a thrust action from said pistons 34 which face it.

According to one embodiment, the two-disc caliper 4 comprises a first and a second side pad 48, 50, arranged respectively, in a mounting configuration, from the part of the side support portion 14 and from the part of the disc support portion 16.

Said side pads 48,50 are arranged from axially opposed parts with respect to a central pad 52, adapted to exercise a braking action on two axially consecutive brake discs 8. In other words, the central pad 52, in a mounting configuration, is axially arranged between two brake discs 8.

In particular, between each side pad 48, 50 and the central pad 52 a brake disc 8 is interposed.

The side pads 48,50 are preferably equivalent and each comprise the friction portion 40 and the support plate 44. Said side pads 48,50 are arranged so that the respective friction portions 40 face each other and the central pad 52, as well the respective brake discs 8.

The friction portions 40 of the side pads 48,50, as well as the central pad 52, may be of various type, for example of single-piece type, having a single friction portion or of the type comprising two or more islands, or rather friction portions separated from each other. The friction portions may also comprise slots and outlets of various type.

According to one embodiment, the support plates 44 of the side pads 48,50 comprise a pair of portions 56 arranged symmetrically with respect to a plane of symmetry M of the pads themselves. The plane of symmetry M, in a mounting configuration of the pads in the caliper body 12, passes for the rotation axis X.

The portions 56 are preferably equivalent to each other and, from the part turned towards the plane of symmetry M of the pad, tangentially identify and define a central channel 60.

The portions 56, from the part opposite the plane of symmetry M of the pad 48,50, each comprise a recess 64, open tangentially towards the caliper body 12.

The central pad 52, according to one embodiment, comprises a central support plate 68 which, from axially opposed parts, supports two distinct friction portions 40.

According to a preferred embodiment, said central pad 52 comprises two distinct and flanking central pads 70', 70", fitting with the related support plates 44 and joining the same by means of appropriate connection means.

Preferably, the support plates 44 comprise slots or lightening structures 71 (figure 11) adapted to lighten the plates themselves and to realise ventilation channels for the removal of heat from the pads.

Each of said central pads 70',70'' comprises two tabs 72 turned radially away from the rotation axis X. Each tab 72 comprises a connection hole 74 and a support hole 76.

The tabs 72 define in tangential direction, from the part turned towards the plane of symmetry M, a central opening 80.

Advantageously, the central opening 80 is symmetrical with respect to the plane of symmetry M and has a greater tangential extension than the tangential extension of the central channel 60 of the side pads 48,50.

Advantageously, each of the tabs 72 preferably comprises a relief or pin 84, having for example cylindrical form. Preferably, each central pad 70',70'' comprises a relief or pin 84 positioned on one tab 72 so to perpendicularly project outward from the tab 72 itself, or rather in axial direction from the part of the respective friction portion 40.

Each of said central pads 70',70'' comprises a recess 88, arranged for example radially towards the rotation axis X of the associated brake discs 8.

According to one embodiment, said connection means of the central pads 70',70'' comprise at least one rivet 92 adapted to bind the central pads 70',70'' together. The connection means are advantageously inserted through connection holes 74.

Moreover, at least one rivet 92 is positioned at said recesses 88.

According to one embodiment, the central pads 70',70'' comprise a pair of small plates 93 forming overall a 'C' section, so to locking fit the tabs 72 of the pads 70',70'' in contact with each other.

The small plates 93 are equipped with a first and a second hooking hole 94',94'' counter-shaped with respect to the connection holes 74 and support holes 76 of the tabs 72.

According to a further embodiment, the small plates 93 form overall a 'C' section, having a side edge 95 adapted to go in abutment against a corresponding edge of the plates 44, and a pair of arms 96 adapted to go in abutment against the tabs 72.

Preferably, the small plates 93 are equipped with at least one positioning hole 100 adapted to house the reliefs 84 of the tabs 72 which have the function of positioning and locking in position the small plates 93 with respect to the tabs themselves. Alternatively, recesses 101 may also used at the positioning hole 100, at least partially counter-shaped with respect to the reliefs 84.

According to one embodiment, the small plates 93 are of 'schim' type, or rather they comprise a layer of a polymeric or rubber material, and a layer of stainless steel. Following the mounting, the steel layer is advantageously position so to face and be in abutment against the caliper body, while the rubber layer is positioned in contact with the pads so to have an anti-noise function.

Preferably, the small plates are realised in steel.

The side support portions 14 and side disc portions 16 are connected with each by at least one side connection bridge 104', 104'' which extends atop the brake discs 8, tangentially defining the caliper body 12, as well the housing space 24.

Advantageously, the caliper body 12 comprises a central bridge 108, which extends between the side support portion 14 and the side disc portion 16, said central bridge 108 being arranged, with respect to a tangential direction, between the side connection bridges 104',104''.

According to one embodiment, the central bridge 108 has a substantially parallelepiped shape and extends from a first end 110, situated in mounting configuration on the side support portion 14, and a second end 112, axially opposed to said first end 110. In other words, the second end 112 faces the side disc portion 16. According to one embodiment, said central bridge 108 extends between the first and second end 110,112 along an extension axis S, preferably parallel to the rotation axis X and to the plane of symmetry M.

The central connection 108 comprises a lower wall 114, radially facing the associated brake disc 8 and pads 28, and an upper wall 116, radially opposed to the brake disc and to the lower wall 114.

At the first end 110, the central bridge 108 comprises at least one anchoring hole 118, passing through the bridge and adapted to permit the fastening of the first end 110 of the central bridge 108 with respect to the side support portion 14.

The fastening of the first end 110, substantially fixed, may be realised by screw fastening means 120 adapted to penetrate in a fastening hole 121, directed in radial direction, positioned on the side support portion 14.

Preferably, between the screw fastening means 120 and the anchoring hole 118, a bush 122 is interposed having an insertion portion 122' adapted to be inserted in the hole 118 and a collar 122'' of dimensions greater than the anchoring hole 118 so to realise a stopping of the central bridge 108. According to one embodiment, between the bush 122 and the anchoring hole 118 there is a clearance, or rather a clearance on a surface perpendicular to an extension axis of the anchoring hole 118 as well as the bush 122, which are preferably radial axes. According to one embodiment, a height or thickness of the insertion portion 122' of the bush 122 is greater than the radial thickness of the central bridge at the hole 118, so that between the bush 122 and the hole 118 there is a clearance with respect to the insertion direction of the bush which is preferably a radial direction.

The fastening hole 121 is realised, according to one embodiment, in a portion comprised between the cylinders 32, so to not interfere with the cylinders themselves. Preferably, the side support portion 14 comprise an insertion seat 123 which extends axially and symmetrically with respect to said plane M of the caliper. The insertion seat 123 is radially open, from the part opposite the rotation axis X, so to permit the radial insertion of the central bridge 108. The insertion seat 123 is adapted to house the central bridge 108 by the part of the first end 110, preferably substantially fixed, so to block rotations related to the central bridge 108 with respect to the seat 123 and to the side support portion 14. Preferably, the insertion seat 123 is defined by at least one pair of uprights 124 adapted to favour the containment and guide of the central bridge 108. Preferably, the uprights 124 are arranged axially on opposite sides with respect to said fastening holes 121.

Advantageously, said central bridge 108, in particular the lower wall 114, is associated with a spring 126, so to radially face the associated brake discs 8.

The spring 126 comprises a hooking portion 128, having a 'C' section, substantially counter-shaped with respect to the central bridge 108 so to realise a snap coupling with it.

The hooking portion 128, in a mounting configuration on the related central bridge 108, is arranged from the part of the first end 110 of the central bridge 108 and is equipped with a through hole 129, aligned with the anchoring hole 118 and adapted to permit the passage of screw fastening means 120.

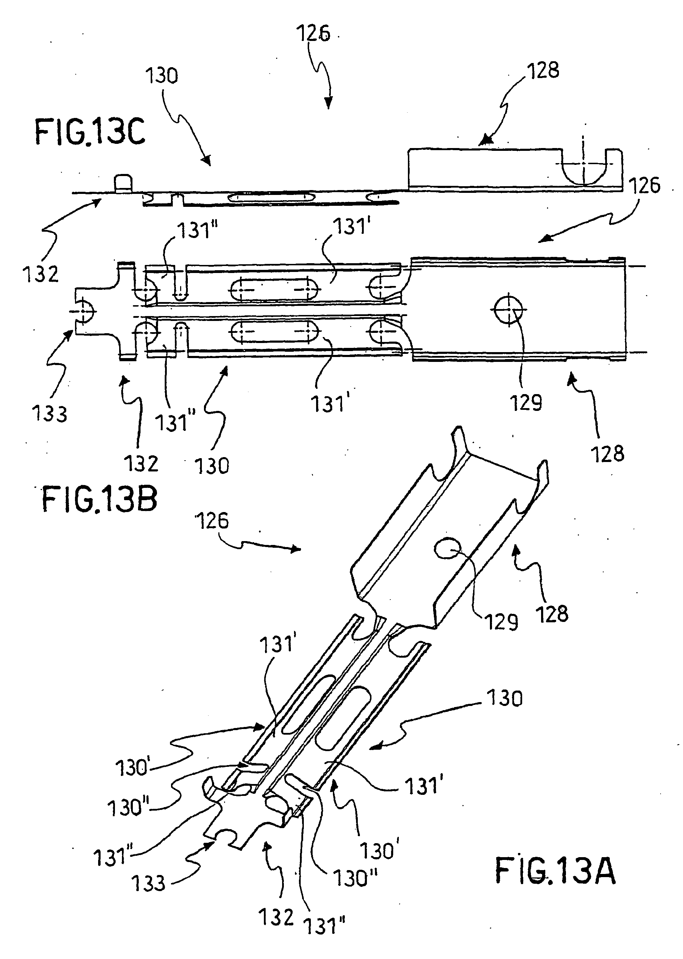

The spring 126 comprises a thrust portion 130 adapted to radially affect the central pad 52 and side pads 48,50. The thrust portion 130 is preferably radially curved from the part opposite the lower wall 114 of the central bridge 108 so to realise a pair of thrust tabs 130', adapted to radially affect the pads towards the rotation axis X. According to one embodiment, said thrust tabs 130' are interrupted by notches 130'' which subdivide it into a first and a second thrust portion 131' and 131'' (figure 13A). In a mounting configuration of the caliper 4, the first thrust portion 131' elastically affects in a radial direction the first side pads 48 and the central pad 52, while the second thrust portion 131'' elastically affects in a radial direction the second side pads 50.

Preferably, the spring 126, from part the opposite the hooking portion 128, with respect to the thrust portion 130, comprises a second hooking portion 132, adapted to cooperate with the side disc portion 16 of the caliper 4. Said second hooking portion 132 comprises a forked end 133, adapted to cooperate with the side disc portion 16.

Advantageously, the central bridge 108 has a tangential size or width substantially equal to the tangential width of the central channels 60 of the side pads 48,50, at the side pads themselves.

In this manner, following the assembly of the caliper 4, the central bridge 108 is tangentially in contact with the side pads 48,50 at the central channels 60.

Advantageously, the central bridge 108 has a tangential size or width less than the tangential width of the central opening 80 of the central pad 52, at the central pad itself.

In this manner, following the assembly of the caliper 4, the central bridge 108 is substantially not affected by the central pad 52, since the greater width of the central opening 80 of the central pad 52 with respect to the width of the central bridge 108 prevents the tangential contact between said central bridge 108 and said central pad 52.

Advantageously, the caliper 4 comprises a pair of support pins 134 which axially cross the caliper body 12, parallel to the central bridge 108.

The support pins 134 are for example cylindrical and pass through the recesses 64 of the side pads 48,50 and the second support holes 76 of the central pad 52, so to realise a guide and support for said pads.

The caliper body 12, at the side disc portion, comprises a second insertion seat 136, axially directed and preferably aligned and parallel with respect to the first insertion seat 123.

The second insertion seat 136 is adapted to receive the second end 112 of the central bridge 108, so to maintain a tangential clearance between said second end 112 and the seat itself. The second end 112 may comprise undercuts 137, with respect to the tangential direction, in order to further increase such clearance tangential to a requested dimension.

The caliper 4, at the side disc portion 16, comprises a fastening element 138, adapted to be constrained for example with a screw 140 to the caliper body and adapted to go in abutment on the second end 112 of the central bridge 108, at the second insertion seat 136. The fastening element 138 comprises a step 139 adapted to constrain the radial movements of the second end 112 of the central bridge 108 along a direction moving away from the caliper body 12.

The connection between the fastening element 138 and the second end 112 of the central bridge 108 is not of fixed type; indeed, the fastening element 138 permits tangential movements of the second end 112 of the central bridge 108, while it limits radial movements, constraining the second end 112 of the central bridge 108 of the caliper body 12 in the radial direction along a direction moving away from the caliper body 12.

According to one embodiment, the caliper 4 comprises adjustment means 150 of the clearance, adapted to adjust the maximum tangential clearance of the first end 110 of the central bridge 108 with respect to the side support portion 14 of the caliper body 12.

According to one embodiment, said adjustment means 150 comprise a stop screw 154 passing through one of said uprights 124. According to one embodiment, the stop screw 154 is screwed in one of the uprights 154, which has a threaded through hole, such that one abutment end 158 of the screw 154 exits from the upright and is positioned on the first insertion seat 123 facing the first end 110 of the central bridge 108. The abutment end 158 adjusts the tangential clearance of the first end 110 with respect to the first insertion seat 123, realising in fact a stop.

According to a preferred embodiment of the present invention, the stop screw 154 is passing through one of the uprights, without screwing into the same, and passes through an adjustment hole 160 arranged on the first end 110 of the central bridge 108, said adjustment hole 160 being internally threaded so to be screwed with the screw 154. Following the screwing between the screw 154 and the adjustment hole 160, the central bridge 108 is thrust in abutment against the upright crossed by the screw 154.

Advantageously, both in the embodiment in which the screw 154 is screwed on the upright and the embodiment in which the screw 154 is screwed in the adjustment hole 160 of the central bridge 108, the effect of the screw is that of reducing or eliminating the clearance between the first end 110 of the central bridge 108 and the rear upright with respect to a forward speed direction of the vehicle on which the caliper is applied.

In other words, in the case in which the screw 154 is screwed on the upright so that the end 158 pushes against the central bridge, the screw head will be turned from the part of the forward movement direction so to push the central bridge in abutment against the rear upright with respect to said forward speed direction. In this manner, during a braking action in the forward movement of the vehicle, the braking force transmitted to the central bridge will tend to affect the bridge itself along a consistent direction of screw action.

In the case in which the screw 154 is screwed on the central bridge so to push the central bridge towards the upright crossed by the screw, the screw head will be turned from the opposite part towards the forward movement direction, so to push the central bridge in abutment against the rear upright with respect to said forward speed direction. In this manner, during a braking action in the forward movement of the vehicle, the braking force transmitted to the central bridge will tend to affect the bridge itself along a consistent direction of screw action.

Advantageously, the tangential clearance of the first end 110 of the central bridge 108 with respect to the insertion seat 123 must not be greater than the tangential clearance of the second end 112 with respect to the second insertion seat 136, so that when the central bridge 108 receives a tangential thrust from the pads 48,50, after an initial adjustment said tangential force is always transmitted, at least partially, to the side support portion 14 of the caliper body 12.

Now the operation of the caliper for disc brakes according to the invention will be described.

In particular, the caliper 4 is mounted through support means 20 atop the at least one brake disc 8 so that the side support portion 14 is axially facing the spindle and the side disc portion 16 is axially opposed to such spindle.

Following the operation of the caliper, the pistons 34 exert a thrusting action on the first side pad 48 which axially thrusts on the first disc 8'. The first disc 8' is axially sliding so to exert a thrusting action on the central pad 52 and on the second disc 8''.

In this manner, the second disc 8'' exerts a thrusting action on the second side pad 50. The pads 48, 52 may slide axially along the respective support pins 134.

The side pads 48,50 directly affect the central bridge 108 at the respective central canals 60 and transmit the tangentially directed braking force to the central bridge 108.

The central bridge 108 at least partially transmits such tangential forces, received by side pads 48,50, directly on the side support portion 14 of the caliper body 12, at the fixed connection of the first end 10.

The central pad 52, thanks to the fact that it is not in tangential contact with the central bridge 108, is free to tangentially abut against the caliper body 12, thus unloading the braking force on the caliper body itself and in particular on the side connection bridges 104',104''.

The operation of the caliper may be characterised in light of the tangential clearance between the second end 112 of the central bridge 108 and the second insertion seat 136.

In particular, if such clearance is sufficiently wide so that even when, during the braking, the central bridge is in the condition of maximum tangential bending and of complete recovery of the clearances between the first end 110 and the first insertion seat 123, the second end 112 does not tangentially abut against the second insertion seat 136, then in any braking condition, substantially all tangential forces exchanged with the side pads 48,50 are transmitted to the side support portion 14 of the caliper body 12.

If instead such tangential clearance is such that the second end tangentially abuts against the second insertion seat 136, then the tangential forces are transmitted at least in part to the side support portion 14 through the central bridge 108. The remaining part of the tangential forces are transmitted by the second end 112 of the bridge 108 to the side disc portion 16, and from this are transmitted through the side connection bridges 104',104'' to the side support portion 14.

In every case and in every braking condition, thanks to the choice of the clearance, at least in tangential direction, between the second end 112 and the second insertion seat 136, the tangential forces received by the central bridge through the side pads 48,50 are at least partially transmitted to the side support portion 14 of the caliper body 12.

The spring 126 is interposed between the central bridge 108 and the caliper body 12 so to affect the central bridge moving radially away from the caliper body, preventing the radial contact between the central bridge and the caliper body, at the insertion seats 123,126. The presence of a radial clearance respectively between the bush 122 and the anchoring hole 118, at the first end 110, as well as between the fastening element 138 and the second end 112 permits radial translation movements of the central bridge 108 with respect to the caliper body. Said radial translation movements are elastically affected by the spring, along a direction moving away from the caliper body, and are constrained by stoppers realised by a step 139 of the fastening element 138 and by the collar 122'' of the bush 122.

As may be appreciated from that described, the described caliper for disc brakes permits overcoming the drawbacks presented in the prior art.

In particular, the described caliper permits limiting the deformation of the caliper body even when the caliper body has a high axial extension.

Indeed, the side pads 48,50 unload the tangential braking forces on the central bridge 108 which being substantially fitted at the first end, transfers such forces, having a large arm with respect to the caliper support means, directly on the side support portion of the caliper itself.

In other words, the central bridge, at least in order to transmit the braking force, is constrained to the caliper body substantially only at the side turned toward the anchorings of the caliper, and in this manner reacts to the forces of the side pads, transferring them to the side support portion of the caliper.

Furthermore, in the case in which the central bridge is constrained to the caliper body only by the part of the caliper connections, while the distal end of the central bridge is free, no force is transferred to the cantilevered portion of the caliper, or rather to the side disc portion, which in the case of multidisc calipers, has a considerable axial extension and therefore a large lever arm which would lead to considerable deformations of the caliper body during the braking step.

The central pad in turn reacts on the side bridges with a reduced arm, comparable to a typical arm of the monodisc calipers; in this manner, the deformations of the caliper are limited, unloading the greater size moments on the more rigid portion of the caliper, or rather the side support portion.

The caliper according to the invention guarantees reduced deformations under braking, without requiring stiffening or oversizing of the caliper body which would considerably increase the overall mass.

The maintenance operations may be easily carried out in that central bridge may be easily removed, and in this manner a quick substitution of the pads for example is possible.

One skilled in the art, in order to satisfy contingent and specific needs, may bring numerous modifications and variations to the disc brake calipers described above, all moreover contained in the scope of the invention defined by the following claims.

## Claims

1. Disc brake caliper (4), connectable astride at least one brake disc (8) of rotation axis (X), said caliper (4) having a caliper body (12) comprising
a side support portion (14), which comprises support means (20) for said caliper (4),
a side disc portion (16) opposed to the side support portion (14),
at least one of said side support portions (14) and side disc portions (16) comprising at least one cylinder (32) adapted to house a piston (34) which faces pads (28, 48) for the braking of the brake discs (8),
side connection bridges (104',104'') between said side support portions (14) and side disc portions (16), extending astride said brake discs (8), the side support portions (14) and side disc portions (16) and the side connection bridges (104',104'') defining a housing space (24) for a portion of the brake discs (8) and for the pads (28),
said caliper (4) comprises at least one central bridge (108) which extends astride the brake discs (8) between the side support portions (14) and side disc portions (16), said central bridge (108) being bound, at one connection end (110), to the side portion (14), and being substantially free, at least in tangential direction with respect to the rotation axis (X), at a second end (112) from the part of the side disc portion (16),
**characterised in that**
side pads (48, 50) are arranged from axially opposed parts with respect to a central pad (52), the central pad being axially arranged between two discs (8),
the central bridge (108) is tangentially in contact with the side pads (48,50) at central channels (60) of said side pads (48,50) in order to be operatively affected by the side pads (48,50) so to transmit, at least partially, the tangential forces transmitted by such side pads (48,50) of the side disc portion (16) to the side support portion (14) of the caliper body (12),
wherein the central bridge (108), at the first end (110), is substantially fixed in the side support portion (14) of the caliper body (12), so to at least partially transmit the tangential forces transmitted by the side pads (48,50).

2. Disc brake caliper (4) according to claim 1, in which the central bridge (108), at the first end (110), is bound to the side support portion (14) of the caliper body (12), along a tangential clearance less than or equal to a tangential clearance of the second end (112) of the central bridge (108) with respect to the side disc portion of the caliper body (12), so to at least partially transmit the tangential forces transmitted by the side pads (48,50) to the side support portion (14) of the caliper body (12).

3. Disc brake caliper (4) according to any one of the preceding claims, in which the tangential clearance of the second end (112) with respect to the side disc portion (16) of the caliper body (12) is greater with respect to a maximum tangential bending of the central bridge during a braking step, in a condition of recovery of the clearances between the central bridge (108) and the caliper (12), so to entirely transmit the tangential forces transmitted by such side pads (48,50) to the side support portion of the caliper body (12).

4. Disc brake caliper (4) according to any one of the previous claims, in which at the first end (110) the central bridge (108) comprises at least one anchoring hole (118), passing through the bridge and adapted to permit the fastening of the first end (110) of the central bridge (108) with respect to the side support portion (14), in which between the screw fastening means (120) and the anchoring hole (118) a bush (122) is interposed having an insertion portion (122') and a collar (122'') of greater dimensions than the anchoring hole (118) so to realise a stop of the central bridge (108).

5. Disc brake caliper (4) according to claim 4, in which between the bush (122) and the anchoring hole (118) there is a clearance with respect to a surface perpendicular to an extension axis of the anchoring hole (118) as well as the bush (122).

6. Disc brake caliper (4) according to any one of the previous claims, in which the side support portion (14) comprises an insertion seat (123) which extends axially and symmetrically with respect to the extension axis (S) or rotation axis (X),
the insertion seat (123) is open radially, from the part opposite the rotation axis (X), so to permit the radial insertion of the central bridge (108), and the insertion seat (123) is adapted to house the central bridge (108) from the part of the first end (110), substantially fixed, so to prevent rotations related to the central bridge (108) with respect to the insertion seat (123) and to the side support portion (14).

7. Disc brake caliper (4) according to claim 6, in which the side support portion (14) is equipped, on the part opposite the support means (20), with at least one pair of uprights (124) adapted to favour the containment and guide of the central bridge (108) within the insertion seat (123).

8. Disc brake caliper (4) according to any one of the previous claims, in which the central bridge (108) has a tangential size or width substantially equal to a tangential width of the central channels (60) of the side pads (48,50), at the side pads themselves.

9. Disc brake caliper (4) according to any one of the previous claims, in which the central bridge (108) has a tangential size or width less than the tangential width of a central opening (80) of central pad (52).

10. Disc brake caliper (4) according to any one of the previous claims, in which the caliper body (12), at the side disc portion (16), comprises a second insertion seat (136) directed axially and aligned with respect to the first insertion seat (123), in which the second insertion seat (136) is adapted to receive the second end (112) of the central bridge (108) so to maintain a tangential clearance between the second end (112) and the seat itself (136).

11. Disc brake caliper (4) according to claim 10, in which the caliper body (12), at the side disc portion (16), comprises a fastening element (138) adapted to be bound to the caliper body (12) and adapted to constrain the second end (112) of the central bridge (108) at the second insertion seat (136), in which the fastening element (138) cooperates with the second end (112), permitting tangential movements of the second end (112) of the central bridge (108) and constraining, in radial direction, the second end (112) of the central bridge (108).

12. Disc brake caliper (4) according to any one of the previous claims, in which, a lower wall (114) of said central bridge (108) is associated with a spring (126), so to radially face the associated brake discs (8), in which the spring (126) comprises a hooking portion (128), having a 'C' section form, substantially counter-shaped with respect to the central bridge (108) so to realise a snap coupling with it.

13. Disc brake caliper (4) according to claim 12, in which the spring (126) comprises a thrust portion (130) adapted to radially affect the central (52) and side (48,50) pads.

14. Disc brake caliper (4) according to claim 13, in which the thrust portion (130) is preferably radially curved from the part opposite a lower wall (114) of the central bridge (108), so to realise a pair of thrust tabs (130') adapted to radially affect the pads towards the rotation axis (X).

15. Disc brake caliper (4) according to claim 14, in which said thrust tabs (130') are interrupted by notches (130'') which subdivide them into a first and a second thrust portion (131',131''), so that, in a mounting configuration, the first thrust portion (131') elastically affects in radial direction the first side pads (48) and the central pad (52), while the second thrust portion (131'') elastically affects in radial direction the second side pads (50).

16. Disc brake caliper (4) according to any one of the previous claims, in which the caliper (4) comprises adjustment means (150) of the clearance, adapted to adjust the maximum tangential clearance of the first end (110) of the central bridge (108) with respect to the side support portion (14) of the caliper body (12).

17. Disc brake caliper (4) according to claim 16, in which said regulation means (150) comprise a stop screw (154) passing through one of said uprights (124) and adapted to affect said first end (110) of the central bridge (108).

## Patentansprüche

1. Scheibenbremssattel (4), der quer über wenigstens eine Bremsscheibe (8), die die Drehachse (X) aufweist, verbindbar ist, wobei der Sattel (4) einen Sat-telkörper (12) aufweist, umfassend
einen Seitenabstützabschnitt (14), der Abstützmittel (20) für den Sattel (4) umfasst,
einen Seitenscheibenabschnitt (16), der dem Seitenabstützabschnitt (14) gegenüberliegt,
wenigstens einer der Seitenabstützabschnitte (14) oder der Seiten-scheibenabschnitte (16) umfasst wenigstens einen Zylinder (32), der derart ausgebildet ist, dass er einen Kolben (34) aufnimmt, der den Klötzen (28, 48) für das Abbremsen der Bremsscheiben (8) zugewandt ist, Seitenverbindungsbrücken (104', 104'') zwischen den Seitenabstützabschnitten (14) und den Seitenscheibenabschnitten (16), die sich quer über die Bremsscheiben (8) erstrecken, wobei die Seitenabstützabschnitte (14) und die Seitenscheibenabschnitte (16) und die Seitenverbindungsbrücken (104', 104'') einen Aufnahmeraum (24) für einen Abschnitt der Bremsscheiben (8) und für die Klötze (28) bilden,
der Sattel (4) umfasst wenigstens eine zentrale Brücke (108), die sich quer über den Bremsscheiben (8) zwischen den Seitenabstützabschnitten (14) und den Seitenscheibenabschnitten (16) erstreckt, wobei die zentrale Brücke (108) an einem Verbindungsende (110) mit dem Seitenabschnitt (14) verbunden ist und im Wesentlichen wenigstens in tangentialer Richtung bezüglich der Drehachse (X) an einem zweiten Ende (112) frei von dem Abschnitt des Seitenscheibenabschnitts (16) ist,
**dadurch gekennzeichnet,**
**dass** Seitenklötze (48, 50) von axial gegenüberliegenden Teilen be-züglich eines zentralen Klotzes (52) angeordnet sind, wobei der zent-rale Klotz zwischen zwei Scheiben (8) axial angeordnet ist,
**dass** die zentrale Brücke (108) mit den Seitenklötzen (48, 50) an Zent-ralkanälen (60) der Seitenklötze (48, 50) tangential in Kontakt steht, so dass darauf durch die Seitenklötze (48, 50) in Betrieb eingewirkt wird, so dass wenigstens teilweise die Tangentialkräfte, die von solchen Seitenklötze (48, 50) des Seitenscheibenabschnitts (16) an den Seitenabstützabschnitt (14) des Sattelkörpers (12) übertragen werden, übertragen werden,
wobei die zentrale Brücke (108) an dem ersten Ende (110) im We-sentlichen in dem Seitenabstützabschnitt (14) des Sattelkörpers (12) befestigt ist, um so wenigstens teilweise die Tangentialkräfte, die von den Seitenklötzen (48, 50) übertragen werden, zu übertragen.

2. Scheibenbremssattel (4) gemäß Anspruch 1, wobei die zentrale Brücke (108) an dem ersten Ende (110) mit dem Seitenabstützabschnitt (14) des Sattelkör-pers (12) entlang eines tangentialen Freiraums, der weniger oder gleich groß wie ein tangentialer Freiraum des zweiten Endes (112) der zentralen Brücke (108) bezüglich des Seitenscheibenabschnitts des Sattelkörpers (12) ist, angebunden ist, um so wenigstens teilweise die Tangentialkräfte, die von den Seitenklötzen (48, 50) an den Seitenabstützabschnitt (14) des Sattelkörpers (12) übertragen werden, zu übertragen.

3. Scheibenbremssattel (4) gemäß irgend einem der vorangehenden Ansprüche, wobei der tangentiale Freiraum des zweiten Endes (112) bezüglich des Seitenscheibenabschnitts (16) des Sattelkörpers (12) größer im Verhältnis zu einer maximalen tangentialen Biegung der zentralen Brücke während des Bremsens in einem Erholungszustand der Freiräume zwischen der zentralen Brücke (108) und dem Sattel (12) ist, um die Tangentialkräfte, die von solchen Seitenklötzen (48, 50) an den Seitenabstützabschnitt des Sattelkörpers (12) übertragen werden, vollständig zu übertragen.

4. Scheibenbremssattel (4) gemäß irgend einem der vorangehenden Ansprüche, wobei an dem ersten Ende (110) die zentrale Brücke (108) wenigstens eine Verankerungsbohrung (118) umfasst, die sich durch die Brücke hindurch erstreckt und derart ausgebildet ist, dass das erste Ende (110) der zentralen Brücke (108) bezüglich des Seitenabstützabschnitts (14) befestigt werden kann, wobei zwischen den Schraubenbefestigungsmitteln (120) und der Verankerungsbohrung (118) eine Buchse (122) eingefügt ist, die einen Einführabschnitt (122') und einen Kragen (122'') mit größeren Dimensionen als die Verankerungsbohrung (118) aufweist, um einen Anschlag der zentralen Brücke (108) vorzusehen.

5. Scheibenbremssattel (4) gemäß Anspruch 4, wobei zwischen der Buchse (122) und der Verankerungsbohrung (118) ein Freiraum bezüglich einer Flä-che, die zu einer Erstreckungsachse der Verankerungsbohrung (118) und der Buchse (122) rechtwinklig verläuft, und der Buchse (122) vorgesehen ist.

6. Scheibenbremssattel (4) gemäß irgend einem der vorangehenden Ansprüche, wobei der Seitenabstützabschnitt (14) einen Einführsitz (123) umfasst, der sich axial und symmetrisch bezüglich der Erstreckungsachse (S) oder der Drehachse (X) erstreckt,
wobei der Einführsitz (123) ausgehend von dem der Drehachse (X) gegen-überliegenden Abschnitt radial offen ist, um die zentrale Brücke (108) radial einführen zu können, und der Einführsitz (123) derart ausgebildet ist, dass er die zentrale Brücke (108) von dem Abschnitt des ersten Endes (110) im We-sentlichen fest aufnehmen kann, um ein Drehen der zentralen Brücke (108) bezüglich des Einführsitzes (123) und bezüglich des Seitenabstützabschnitts (14) zu verhindern

7. Scheibenbremssattel (4) gemäß Anspruch 6, wobei der Seitenabstützab-schnitt (14) a n dem Abschnitt gegenüberliegend zu den Abstützmitteln (20) mit wenigstens zwei ein Paar bildenden Vorsprüngen (124) versehen ist, die derart ausgebildet sind, dass die Aufnahme und die Führung der zentralen Brücke (108) innerhalb des Einführsitzes (123) begünstigt wird.

8. Scheibenbremssattel (4) gemäß irgend einem der vorangehenden Ansprüche, wobei die zentrale Brücke (108) eine tangentiale Größe oder Breite aufweist, die im Wesentlichen gleich einer tangentialen Breite der zentralen Kanäle (60) der Seitenklötze (48, 50) an den Seitenklötzen ist.

9. Scheibenbremssattel (4) gemäß irgend einem der vorangehenden Ansprüche, wobei die zentrale Brücke (108) eine tangentiale Größe oder Breite aufweist, die kleiner als die tangentiale Breite einer zentralen Öffnung (80) des zentralen Klotzes (52) ist.

10. Scheibenbremssattel (4) gemäß irgend einem der vorangehenden Ansprüche, wobei der Sattelkörper (12) an dem Seitenscheibenabschnitt (16) einen zweiten Einführsitz (136) umfasst, der sich bezüglich des ersten Einführsitzes axial erstreckt und mit diesem ausgerichtet ist, wobei der zweite Einführsitz (136) derart ausgebildet ist, dass er das zweite Ende (112) der zentralen Brücke (108) aufnimmt, um einen tangentialen Freiraum zwischen dem zweiten Ende (112) und dem Sitz (136) selber aufrechtzuerhalten.

11. Scheibenbremssattel (4) gemäß Anspruch 10, wobei der Sattelkörper (12) an dem Seitenscheibenabschnitt (16) ein Befestigungselement (138) umfasst, das derart ausbildet ist, dass es den Sattelkörper (12) anbinden und das zweite Ende (112) der zentralen Brücke (108) an dem zweiten Einführsitz (136) festsetzen kann, wobei das Befestigungselement (138) mit dem zweiten Ende (112) zusammenwirkt, so dass tangentiale Bewegungen des zweiten Endes (112) der zentralen Brücke (108) ermöglicht sind und das zweite Ende (112) der zentralen Brücke (108) in radialer Richtung festgesetzt wird.

12. Scheibenbremssattel (4) gemäß irgend einem der vorangehenden Ansprüche, wobei eine untere Wand (114) der zentralen Brücke (108) mit einer Feder (126) so in Wirkverbindung steht, dass sie den zugehörigen Bremsscheiben (8) gegenüber liegt, wobei die Feder (126) einen Einhakabschnitt (128) umfasst, der C-förmig ist und im Wesentlichen gegengleich zu der zentralen Brücke (108) ausgebildet ist, um eine Einschnappverbindung mit dieser bereitzustellen.

13. Scheibenbremssattel (4) gemäß Anspruch 12, wobei die Feder (126) einen Anlaufabschnitt (130) umfasst, der derart ausgebildet ist, dass er den zentra-len Klotz (52) und die Seitenklötze (48, 50) radial beaufschlagt.

14. Scheibenbremssattel (4) gemäß Anspruch 13, wobei der Anlaufabschnitt (130) vorzugsweise von dem Abschnitt aus, der einer unteren Wand (114) der zentralen Brücke (108) entgegengesetzt ist, radial gebogen ist, um zwei ein Paar zu bildende Anlauflaschen (130') vorzusehen, die derart ausgebildet sind, dass die Klötze zu der Drehachse (X) radial beaufschlagt werden.

15. Scheibenbremssattel (4) gemäß Anspruch 14, wobei die Anlauflaschen (130') durch Kerben (130'') unterbrochen sind, die diese in einen ersten und einen zweiten Anlaufabschnitt (131', 131'') unterteilen, so dass im einem montierten Zustand der erste Anlaufabschnitt (131') in radialer Richtung die ersten Seitenklötze (48) und den zentralen Klotz (52) elastisch beaufschlagt, während der zweite Anlaufabschnitt (131'') die zweiten Seitenklötze (50) in radialer Richtung beaufschlagt.

16. Bremsscheibensattel (4) gemäß irgend einem der vorangehenden Ansprüche, wobei der Sattel (4) Stellmittel (150) für den Freiraum umfasst, die derart ausgebildet sind, dass sie den maximalen tangentialen Freiraum des ersten Endes (110) der zentralen Brücke (108) bezüglich des Seitenabstützabschnitts (14) des Sattelkörpers (12) einstellen.

17. Scheibenbremssattel (4) gemäß Anspruch 16, wobei die Stellmittel (150) eine Anschlagschraube (154) umfassen, die sich durch einen der Vorsprünge (124) hindurch erstreckt und derart ausgebildet ist, dass sie das erste Ende (110) der zentralen Brücke (108) beaufschlagt.

## Revendications

1. Etrier de frein à disque (4), qui peut être raccordé à cheval sur au moins un disque de frein (8) pourvu d'un axe de rotation (X), ledit étrier (4) ayant un corps d'étrier (12), comprenant :
- une portion de support latérale (14), qui comprend des moyens de support (20) pour ledit étrier (4),
- une portion de disque latérale (16) opposée à la portion de support latérale (14),
- au moins l'une desdites portions de support latérale (14) et de disque latérale (16) comprenant au moins un cylindre (32) à même de recevoir un piston (34) qui est en regard de plaquettes (28, 48) pour le freinage des disques de frein (8),
- des ponts de raccordement latéraux (104', 104") entre lesdites portions de support latérale (14) et de disque latérale (16), s'étendant à cheval sur lesdits disques de frein (8), la portion de support latérale (14) et la portion de disque latérale (16) et les ponts de raccordement latéraux (104', 104") définissant un espace de logement (24) pour une portion des disques de frein (8) et pour les plaquettes (28),
- ledit étrier (4) comprenant au moins un pont central (108) qui s'étend à cheval sur les disques de frein (8) entre les portions de support latérale (14) et de disque latérale (16), ledit pont central (108) étant relié, à une extrémité de raccordement (110), à la portion latérale (14), et étant sensiblement libre, au moins dans une direction tangentielle par rapport à l'axe de rotation (X), à une deuxième extrémité (112) de la portion de disque latérale (16),
**caractérisé en ce que**
des plaquettes latérales (48, 50) sont agencées à partir de pièces axialement opposées par rapport à une plaquette centrale (52), la plaquette centrale étant axialement disposée entre deux disques (8),
le pont central (108) est tangentiellement en contact avec les plaquettes latérales (48, 50) dans des canaux centraux (60) desdites plaquettes latérales (48, 50) afin d'être affecté en service par les plaquettes latérales (48, 50) de manière à transmettre, au moins en partie, les forces tangentielles transmises par ces plaquettes latérales (48, 50) de la portion de disque latérale (16) à la portion de support latérale (14) du corps d'étrier (12),
dans lequel le pont central (108), à la première extrémité (110), est sensiblement fixé à la portion de support latérale (14) du corps d'étrier (12), de manière à transmettre au moins en partie les forces tangentielles transmises par les plaquettes latérales (48, 50).

2. Etrier de frein à disque (4) selon la revendication 1, dans lequel le pont central (108), à la première extrémité (110), est lié à la portion de support latérale (14) du corps d'étrier (12), le long d'un jeu tangentiel inférieur ou égal à un jeu tangentiel de la deuxième extrémité (112) du pont central (108) par rapport à la portion de disque latérale du corps d'étrier (12), de manière à transmettre au moins en partie les forces tangentielles transmises par les plaquettes latérales (48, 50) à la portion de support latérale (14) du corps d'étrier (12).

3. Etrier de frein à disque (4) selon l'une quelconque des revendications précédentes, dans lequel le jeu tangentiel de la deuxième extrémité (112) par rapport à la portion de disque latérale (16) du corps d'étrier (12) est supérieur par rapport à une flexion tangentielle maximale du pont central au cours d'une étape de freinage, dans une situation de récupération des jeux entre le pont central (108) et l'étrier (12), de manière à transmettre en totalité les forces tangentielles transmises par ces plaquettes latérales (48, 50) à la portion de support latérale du corps d'étrier (12).

4. Etrier de frein à disque (4) selon l'une quelconque des revendications précédentes, dans lequel, à la première extrémité (110), le pont central (108) comprend au moins un trou d'ancrage (118) passant à travers le pont et susceptible de permettre la fixation de la première extrémité (110) du pont central (108) par rapport à la portion de support latérale (14), dans lequel, entre les moyens de fixation à vis (120) et le trou d'ancrage (118) est intercalée une douille (122) ayant une portion d'insertion (122') et un collet (122") de plus grandes dimensions que le trou d'ancrage (118) de manière à former une butée du pont central (108).

5. Etrier de frein à disque (4) selon la revendication 4, dans lequel, entre la douille (122) et le trou d'ancrage (118), se trouve un jeu par rapport à une surface perpendiculaire à un axe d'extension du trou d'ancrage (118) ainsi que de la douille (122).

6. Etrier de frein à disque (4) selon l'une quelconque des revendications précédentes, dans lequel la portion de support latérale (14) comprend un siège d'insertion (123) qui s'étend axialement et symétriquement par rapport à l'axe d'extension (S) ou à l'axe de rotation (X),
le siège d'insertion (123) est ouvert radialement, depuis la partie opposée à l'axe de rotation (X), de manière à permettre l'insertion radiale du pont central (108), et le siège d'insertion (123) est à même de recevoir le pont central (108) depuis la partie de la première extrémité (110), sensiblement fixe, de façon à empêcher des rotations relatives au pont central (108) par rapport au siège d'insertion (123) et à la portion de support latérale (114).

7. Etrier de frein à disque (4) selon la revendication 6, dans lequel la portion de support latérale (14) est équipée, sur la partie opposée aux moyens de support (20), d'au moins une paire de montants (124) qui sont à même de favoriser le confinement et le guidage du pont central (108) dans le siège d'insertion (123).

8. Etrier de frein à disque (4) selon l'une quelconque des revendications précédentes, dans lequel le pont central (108) a une taille ou une largeur tangentielle sensiblement égale à la largeur tangentielle des canaux centraux (60) des plaquettes latérales (48, 50), sur les plaquettes latérales elles-mêmes.

9. Etrier de frein à disque (4) selon l'une quelconque des revendications précédentes, dans lequel le pont central (108) a une taille ou une largeur tangentielle inférieure à la largeur tangentielle d'une ouverture centrale (80) de la plaquette centrale (52).

10. Etrier de frein à disque (4) selon l'une quelconque des revendications précédentes, dans lequel le corps d'étrier (12), sur la portion de disque latérale (16), comprend un deuxième siège d'insertion (136) dirigé axialement et aligné par rapport au premier siège d'insertion (123), dans lequel le deuxième siège d'insertion (136) est à même de recevoir la deuxième extrémité (112) du pont central (108) de manière à maintenir un jeu tangentiel entre la deuxième extrémité (112) et le siège lui-même (136).

11. Etrier de frein à disque (4) selon la revendication 10, dans lequel le corps d'étrier (12), sur la portion de disque latérale (16), comprend un élément de fixation (138) qui est à même d'être lié au corps d'étrier (12) et à même de solliciter la deuxième extrémité (112) du pont central (108) dans le deuxième siège d'insertion (136), dans lequel l'élément de fixation (138) coopère avec la deuxième extrémité (112), ce qui permet des mouvements tangentiels de la deuxième extrémité (112) du pont central (108) et sollicite, dans la direction radiale, la deuxième extrémité (112) du pont central (108).

12. Etrier de frein à disque (4) selon l'une quelconque des revendications précédentes, dans lequel une paroi inférieure (114) dudit pont central (108) est associée à un ressort (126), de manière à se trouver radialement en regard des disques de frein associés (8), dans lequel le ressort (126) comprend une portion d'accrochage (128), ayant une forme en C en coupe, sensiblement formée en contrepartie par rapport au pont central (108) de manière à assurer un couplage par encliquetage avec celui-ci.

13. Etrier de frein à disque (4) selon la revendication 12, dans lequel le ressort (126) comprend une portion de poussée (130) qui est à même d'affecter radialement les plaquettes centrale (52) et latérales (48, 50).

14. Etrier de frein à disque (4) selon la revendication 13, dans lequel la portion de poussée (130) est de préférence incurvée radialement depuis la partie opposée à une paroi inférieure (114) du pont central (108), de manière à réaliser une paire de languettes de poussée (130') qui sont à même d'affecter radialement les plaquettes vers l'axe de rotation (X).

15. Etrier de frein à disque (4) selon la revendication 14, dans lequel lesdites languettes de poussée (130') sont interrompues par des encoches (130") qui les subdivisent en une première et une deuxième portions de poussée (131', 131") de sorte que, en configuration de montage, la première portion de poussée (131') affecte élastiquement dans la direction radiale les premières plaquettes latérales (48) et la plaquette centrale (52), tandis que la deuxième portion de poussée (131") affecte élastiquement dans la direction radiale les deuxièmes plaquettes latérales (50).

16. Etrier de frein à disque (4) selon l'une quelconque des revendications précédentes, dans lequel l'étrier (4) comprend des moyens (150) d'ajustement du jeu qui sont à même d'ajuster le jeu tangentiel maximal de la première extrémité (110) du pont central (108) par rapport à la portion de support latérale (14) du corps d'étrier (12).

17. Etrier de frein à disque (4) selon la revendication 16, dans lequel lesdits moyens de régulation (150) comprennent une vis d'arrêt (154) passant à travers l'un desdits montants (124) et adaptée pour affecter ladite première extrémité (110) du pont central (108).
